# EUROPÄISCHE PATENTSCHRIFT

(11) **EP 3 585 520 B1**
(45) Veröffentlichungstag und Bekanntmachung des Hinweises auf die Patenterteilung: **28.04.2021**
(21) Anmeldenummer: 18712562.0
(22) Anmeldetag: 19.03.2018
(51) Int. Cl.: B02C 21/02, B02C 25/00, B07B 1/00, E02F 9/20

(54) **SELBSTFAHRENDE MATERIALAUFBEREITER- UND/ODER UMSCHLAGSANLAGE**
SELF-PROPELLED MATERIAL PROCESSING AND/OR HANDLING PLANT
INSTALLATION AUTOMOTRICE POUR TRAITER ET/OU TRANSBORDER DES MATÉRIAUX

(30) Priorität: 22.03.2017 DE 102017002790
(43) Veröffentlichungstag der Anmeldung: 01.01.2020
(73) Patentinhaber: Liebherr-Components Biberach GmbH, 88400 Biberach/Riss (DE)
(72) Erfinder: PALBERG, Michael, 88499 Riedlingen-Grüningen (DE); MERKLE, Markus, 89597 Munderkingen (DE)
(74) Vertreter: Thoma, Michael
(86) Internationale Anmeldenummer: PCT/EP2018/056818
(87) Internationale Veröffentlichungsnummer: WO 2018/172244

(56) Entgegenhaltungen:
- EP-A1- 0 489 969
- WO-A1-2011/135846
- WO-A1-2015/182944
- DE-A1-102010 014 644

## Beschreibung

Die vorliegende Erfindung betrifft eine selbstfahrende Materialaufbereiter- und/oder -umschlagsanlage zum Aufbereiten und/oder Umschlagen von Bau- und/oder Rohstoffen, insbesondere in Form einer mobilen Brecheranlage, mit zumindest einem Arbeitsaggregat, das von einem elektrischen Aggregatsantrieb mit einem Elektromotor antreibbar ist, zumindest einem elektrischen Fahrantrieb mit einem Elektromotor, sowie einer Steuervorrichtung zum Steuern der Elektromotoren der Aggregats- und Fahrantriebe.

Eine solche selbstfahrende Materialaufbereiteranlage zeigt beispielsweise die Schrift DE 10 2010 014 644 A1, die einen selbstfahrenden Surface-Miner mit einer Fräserwalze und einem Fahrantrieb zeigt, die jeweils elektrisch angetrieben werden, wobei die entsprechenden Elektromotoren mittels Frequenzumrichter gesteuert werden. Ferner zeigt die EP 0 489 969 A1 einen Straßenfertiger, dessen Verbrennungsmotor einen Drehstromgenerator zur Versorgung diverser elektrischer Sekundärantriebe antreibt, deren Betrieb über Frequenzumrichter gesteuert wird. Eine Asphaltwalze mit elektrischen Antrieben beschreibt die WO 2011/135846 A1.

Bei mobilen Brecheranlagen ist es in jüngerer Zeit vorgeschlagen worden, die Fahrantriebe elektrisch auszubilden, um bei geringem Gewicht hohe Drehmomente und eine kompakte Bauweise erzielen zu können, wobei insbesondere die Hydraulikleitungen von Hydraulikantrieben sowie auch das hierfür benötigte Hydrauliköl eingespart werden können. In ähnlicher Weise wurden auch bereits elektrische Antriebe für die Funktionsaggregate solcher Brecheranlagen vorgeschlagen, insbesondere für die Förderbänder, mittels derer die mineralischen Rohstoffe in die eigentliche Brechereinheit zugeführt werden, wobei ggf. auch der Antrieb der Brechereinheit selbst elektrisch mit einem oder mehreren Elektromotoren ausgeführt werden kann. Durch solche elektrischen Antriebe werden nicht nur die Hydraulikleitungen und das Hydrauliköl, das für hydraulische Antriebe benötigt wird, eingespart, sondern es vereinfacht sich auch Ansteuerung der Antriebe.

Die Steuervorrichtung zum Ansteuern der Elektromotoren der Fahr- und Aggregatsantriebe umfasst dabei üblicherweise eine Leistungselektronik, über die die Elektromotoren mit elektrischer Energie versorgt werden, wobei als Teil der Leistungselektronik üblicherweise Frequenzumrichter vorgesehen sind, um die elektrischen Antriebe entsprechend steuern zu können.

Dabei stellen sich für die Ansteuerung der verschiedenen Antriebe unterschiedliche Anforderungen, da beispielsweise die Antriebe der Förderbänder im Arbeitsbetrieb üblicherweise mit konstanten Arbeitsgeschwindigkeiten arbeiten, wenn man von Anfahrvorgängen absieht, während die Fahrantriebe mit variablen Drehzahlen und unterschiedlichen Antriebsrichtungen arbeiten müssen, beispielsweise um vor- und zurücksetzen zu können oder Kurven fahren zu können, was bei den üblicherweise vorhandenen Raupenfahrwerken dadurch bewerkstelligt wird, dass eine kurvenäußere Raupenkette mit größerer Geschwindigkeit angetrieben wird als eine kurveninnere Raupenkette.

Gleichzeitig unterscheiden sich die verschiedenen Fahr- und Aggregatsantriebe beträchtlich hinsichtlich ihres Leistungsbedarfs und der auftretenden Leistungsschwankungen. Während beispielsweise das Brecherwerk einen hohen Leistungsbedarf hat und größere Leistungsschwankungen mit beispielsweise hohen Leistungsspitzen zeigen kann, wenn ein größerer Gesteinsbrocken mit dem Brechwerkzeug in Eingriff gelangt, können die Förderbandantriebe mit geringeren Leistungen und kleineren Schwankungen betrieben werden. Die Fahrantriebe wiederum sind nicht nur hinsichtlich der Antriebsgeschwindigkeit und -richtung variabel zu betreiben, sondern unterliegen auch unterschiedlichen Leistungsanforderungen, beispielsweise wenn die Anlage bergauf oder bergab verfahren wird.

Diese unterschiedlichen Steuerungsanforderungen können mit Frequenzumrichtern in einfacher Weise erfüllt werden, da der jeweilige Antrieb vom zugehörigen Frequenzumrichter mit der benötigten Versorgungsspannung und -frequenz angesteuert werden kann.

Allerdings ergibt sich bei komplexeren Aufbereiter- bzw. Umschlagsanlagen ein entsprechend großer Platzbedarf und eine komplexe Verdrahtung, da im Schaltschrank der Anlage die entsprechenden Frequenzumrichter für die verschiedenen Fahr- und Aggregatsantriebe unterzubringen und in entsprechender Weise zu verdrahten sind. Gleichzeitig ergeben sich relativ hohe Kosten für die benötigten Bauteile und die Montage des Schaltschranks. Bei selbstfahrenden Brecheranlagen sind nämlich üblicherweise diverse Antriebe vorhanden. Neben den beiden Fahrantrieben für die rechten und linken Fahrwerksteile sind üblicherweise im funktionalen Arbeitsbetrieb, d.h. Brecherbetrieb, mehrere Förderbänder anzutreiben. Hinzu kommt der Antrieb für die Brechereinheit selbst, die grundsätzlich in verschiedener Weise ausgebildet sein kann, wobei beispielsweise Brecherwalzen oder -wellen oder Stoßwerkzeuge wie Hammeroder Schlegelwerkzeuge anzutreiben sind.

In ähnlicher Weise gibt es auch bei Sieb- und/oder Umschlagsanlagen wie Bandanlagen zum Umschlagen mineralischer Rohstoffe diverse Arbeitsaggregate, die in entsprechender Weise von jeweiligen Aggregatsantrieben anzutreiben sind.

Hiervon ausgehend liegt der vorliegenden Erfindung die Aufgabe zugrunde, eine verbesserte Aufbereiter- und/oder Umschlagsanlage der eingangs genannten Art zu schaffen, die Nachteile des Standes der Technik vermeidet und Letzteren in vorteilhafter Weise weiterbildet. Insbesondere soll eine Platz sparende, kostengünstigere Ansteuerung der Fahr- und Aggregatsantriebe erreicht werden, die deren unterschiedliches Leistungsniveau und verschiedenen Betriebscharakteristika berücksichtigt.

Erfindungsgemäß wird die genannte Aufgabe durch eine Aufbereiter- und/oder Umschlagsanlage gemäß Anspruch 1 gelöst. Bevorzugte Ausgestaltungen der Erfindung sind Gegenstand der abhängigen Ansprüche.

Es wird also vorgeschlagen, nicht für jeden elektrischen Antrieb einen eigenen Frequenzumrichter vorzusehen, sondern den elektrischen Fahrantrieb und zumindest einen weiteren Aggregatsantrieb hinsichtlich der Ansteuerung an einem gemeinsamen Frequenzumrichter zusammenzufassen, der hinsichtlich seiner Parametrierung veränderbar ausgebildet ist, um der Ansteuerung sowohl des Fahrantriebs als auch des weiteren Aggregatsantriebs gerecht werden zu können. Erfindungsgemäß besitzt die Steuervorrichtung einen gemeinsamen Frequenzumrichter für den zumindest einen Fahrantrieb und den zumindest einen Aggregatsantrieb und sieht verschiedene Parametersätze für den gemeinsamen Frequenzumrichter vor, so dass der Fahrantrieb von dem Frequenzumrichter auf Basis eines ersten Parametersatzes und der Aggregatsantrieb von dem gemeinsamen Frequenzumrichter auf Basis eines zweiten Parametersatzes ansteuerbar ist.

Durch die Verwendung eines gemeinsamen Frequenzumrichters für mehrere Antriebe kann im Schaltschrank entsprechender Platz, der für mehrere Frequenzumrichter benötigt werden würde, eingespart werden, wobei auch die Kosten gesenkt werden können, indem einerseits ein Frequenzumrichter eingespart und andererseits die Verdrahtung vereinfacht werden kann. Gleichzeitig kann durch die Verwendung verschiedener Parametersätze und die im Anlagenbetrieb erfolgende Anpassung der Parametrierung des gemeinsamen Frequenzumrichters an den jeweils anzusteuernden Antrieb den verschiedenen Betriebscharakteristika, Leistungsniveaus und Leistungsschwankungen des jeweils anzutreibenden Fahrantriebs oder Aggregatsantriebs Rechnung getragen werden. Dabei ist besonders das Zusammenfassen des Fahrantriebs mit einem Aggregatsantrieb besonders vorteilhaft, da bei gattungsgemäßen Aufbereiter- bzw. Umschlaganlagen wie Brecheranlagen der Fahrantrieb nicht benötigt wird, wenn die den bestimmungsgemäßen Aufbereiter- bzw. Umschlagbetrieb ausführenden Funktionsaggregate arbeiten und umgekehrt die genannten Arbeitsaggregate, die die bestimmungsgemäße Aufbereiter- und/oder Umschlagfunktion realisieren, abgeschaltet werden können, wenn der Fahrantrieb benötigt wird.

In Weiterbildung der Erfindung kann insbesondere ein Umlaufförderer-Antrieb der Anlage mit einem Fahrantrieb der Anlage an dem gemeinsamen Frequenzumrichter zusammengefasst sein, wobei als Umlaufförderer insbesondere ein Förderband vorgesehen sein kann, das durch einen elektromotorischen Umlauffördererantrieb angetrieben werden kann. Ein solches Förderband kann beispielsweise die zu zerkleinernden Bau- bzw. Rohstoffe der Brechereinheit zufördern und/oder auf ein Sieb aufgeben und/oder einem Umschlagsaggregat wie beispielsweise einem weiteren Transportförderer zufördern. Alternativ oder zusätzlich kann das Förderband auch die bereits zerkleinerten und/oder gesiebten Bau- bzw. Rohstoffe abfördern. Alternativ zu einem solchen Förderband kann auch ein Kettenförderer oder ein Transportwalzenförderer als Umlaufförderer vorgesehen sein, dessen Antriebsvorrichtung von demselben Frequenzumrichter angesteuert wird, durch den auch der Fahrantrieb angesteuert wird. Die Steuervorrichtung kann hierbei zusätzlich zu einem Parametersatz für die Ansteuerung des Fahrantriebs einen zweiten Parametersatz für die Ansteuerung des Umlauffördererantriebs bereithalten, um die Parametrierung des gemeinsamen Frequenzumrichters entsprechend anpassen zu können.

Alternativ oder zusätzlich zu einem solchen Umlaufförderer-Antrieb kann auch ein Brecherwerk-Antrieb und/oder ein Siebrüttler-Antrieb steuerungstechnisch an dem gemeinsamen Frequenzumrichter mit dem Fahrantrieb zusammengefasst sein. Die Steuervorrichtung stellt dann zusätzlich zu einem Fahrantriebs-Parametersatz einen Brecherwerk-Parametersatz und/oder einen Siebrüttler-Parametersatz bereit, um die Parametrierung des Frequenzumrichters entsprechend anpassen zu können, je nachdem, welcher der Antriebe anzusteuern ist.

Der Fahrantrieb der Anlage kann grundsätzlich verschieden ausgebildet sein. In vorteilhafter Weise kann die Anlagen ein Raupenfahrwerk mit rechten und linken Fahrwerksteilen aufweisen, wobei für den rechten und den linken Fahrwerksteil separate elektrische Fahrantriebe mit eigenen Elektromotoren vorgesehen sein können, um die Fahrgeschwindigkeiten und/oder Antriebsrichtungen an der rechten Fahrwerksseite gegenüber der linken Fahrwerksseite verändern zu können.

Sind mehrere Fahrantriebe vorgesehen, beispielsweise um eine linke Raupenfahrwerkskette hinsichtlich Antriebsgeschwindigkeit und/oder Antriebsrichtung gegenüber einer rechten Raupenfahrwerkskette variieren und/oder unabhängig steuern zu können, können in Weiterbildung der Erfindung mehrere Frequenzumrichter für die mehreren Fahrantriebe vorgesehen sein.

In Weiterbildung der Erfindung kann zumindest einer der genannten mehreren Frequenzumrichter für die mehreren Fahrantriebe gleichzeitig noch einem oder mehreren Aggregatsantriebe zugeordnet sein, so dass der zumindest eine Frequenzumrichter einerseits den Antrieb eines der Fahrwerksteile und andererseits zumindest einen Aggregatsantrieb ansteuern kann.

In Weiterbildung der Erfindung ist es aber vorteilhafterweise auch möglich, dass jeder der mehreren Frequenzumrichter, mittels derer die Fahrantriebe der verschiedenen Fahrwerksteile angetrieben bzw. angesteuert werden können, zusätzlich auch noch zumindest einem anderen Arbeitsaggregatsantrieb zugeordnet werden kann, so dass jeder der genannten Frequenzumrichter eine Doppel- oder Mehrfachsteuerungsfunktion besitzt und einerseits zumindest einen Fahrantrieb und andererseits zumindest einen Arbeitsaggregatsantrieb ansteuern kann.

Die verschiedenen Parametersätze zum Anpassen der Parametrierung des gemeinsamen Frequenzumrichters an den jeweils anzusteuernden Antrieb können grundsätzlich in verschiedener Art und Weise bereitgestellt werden, so dass die Parametrierung des Frequenzumrichters im Anlagenbetrieb umschaltbar ist. In Weiterbildung der Erfindung kann die Steuervorrichtung einen Speicherbaustein umfassen, in dem die genannten mehreren Parametersätze abgespeichert sein können. Alternativ oder zusätzlich können die Steuerungsparameter des gemeinsamen Frequenzumrichters auch jeweils aktuell an den jeweils anzusteuernden Antrieb angepasst werden. Beispielsweise kann die Steuervorrichtung hierzu eine geeignete Sensorik und/oder eine Bestimmungseinrichtung aufweisen, mittels derer relevante Charakteristika des jeweils anzusteuernden Antriebs wie beispielsweise Leistungsaufnahme, Widerstand oder dergleichen erfasst bzw. bestimmt werden können, wobei dann ein Anpassungsbaustein der Steuerungsvorrichtung die Parametrierung des gemeinsamen Frequenzumrichters in Abhängigkeit der erfassten bzw. bestimmten Antriebscharakteristika des jeweils anzusteuernden Antriebs anpasst.

Die genannten mehreren Parametersätze können grundsätzlich verschiedene Betriebsparameter des Frequenzumrichters umfassen. Dies können beispielsweise Motordaten des jeweils anzusteuernden Elektromotors sein, insbesondere dessen Nennspannung, Nennfrequenz, Nennstrom, Nenndrehzahl oder Nennleistung. Alternativ oder zusätzlich können anlagenspezifische Parameter wie beispielsweise eine minimale Drehzahl und/oder eine maximale Drehzahl, eine gewünschte Beschleunigungszeit in der Anlaufphase und/oder eine gewünschte Verzögerungszeit in der Abschaltphase sein. Alternativ oder zusätzlich können Drehmomentkennlinien und/oder eine Schlupfkompensation sein, mit der der Umrichter den Schlupf am Elektromotor über eine höhere Frequenz am Stator des Motors kompensieren kann. Der Parametersatz bzw. die Parametrierung des gemeinsamen Frequenzumrichters kann darüber hinaus weitere relevante Parameter umfassen.

Das Verändern der Parametrierung des Frequenzumrichters in Abhängigkeit des vom Frequenzumrichter anzusteuernden Antriebs kann grundsätzlich in verschiedener Art und Weise erfolgen. Beispielsweise kann mittels entsprechender Stellelemente die hardwareseitige Konfiguration des Frequenzumrichters beispielsweise über einen DIP-Schalter verändert werden. Alternativ oder zusätzlich können auch Veränderungen der softwareseitigen Konfiguration vorgenommen werden, insbesondere in Form der Veränderung der vorgenannten Parametersätze, auf deren Basis der Frequenzumrichter arbeitet.

In vorteilhafter Weiterbildung der Erfindung ist die Steuervorrichtung dazu ausgebildet, die Parametrierung des Frequenzumrichters im Anlagenbetrieb zu verändern, so dass die Anlage nicht heruntergefahren bzw. komplett ausgeschaltet werden muss, bevor der Frequenzumrichter mit einem veränderten Parametersatz eine andere Antriebseinrichtung ansteuern kann. Vorteilhafterweise kann die Steuervorrichtung dabei derart beschaffen sein, dass vor Umschalten des Parametersatzes geprüft wird, ob der nicht länger anzusteuernde Antrieb stillgesetzt ist, bevor die Parametrierung für die neu anzusteuernde Antriebseinrichtung am Frequenzumrichter vorgesehen wird. Wird beispielsweise über die Steuervorrichtung ein Startsignal für eines der Förderbänder der Brecheranlage eingegeben, prüft die Steuervorrichtung, ob der Fahrantrieb stillgesetzt ist, wobei dann, wenn dies der Fall ist, die Steuervorrichtung den Frequenzumrichter mit dem Parametersatz versorgt, der für die Ansteuerung des Antriebs des genannten Förderbands bestimmt ist.

Die Erfindung wird nachfolgend anhand eines bevorzugten Ausführungsbeispiels und zugehöriger Zeichnungen näher erläutert. In der Zeichnung zeigt:
- Fig. 1:: eine schematische Darstellung einer selbstfahrenden Brecheranlage nach einer vorteilhaften Ausführung der Erfindung, gemäß der die Frequenzumrichter für die linken und rechten Fahrwerksantriebe jeweils auch zum Ansteuern eines Förderbandantriebs verwendet werden, und

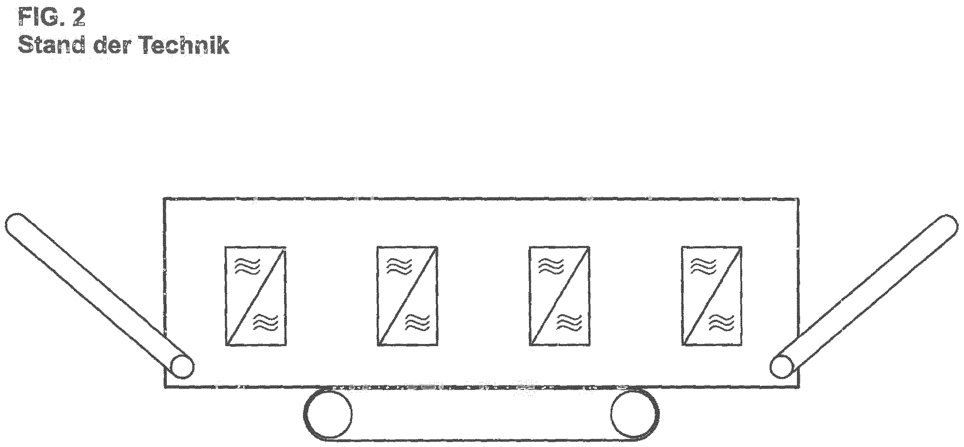

- Fig. 2:: eine schematische Darstellung einer Brecheranlage nach dem Stand der Technik, wonach jedem Antrieb sein eigener Frequenzumrichter zugeordnet war.

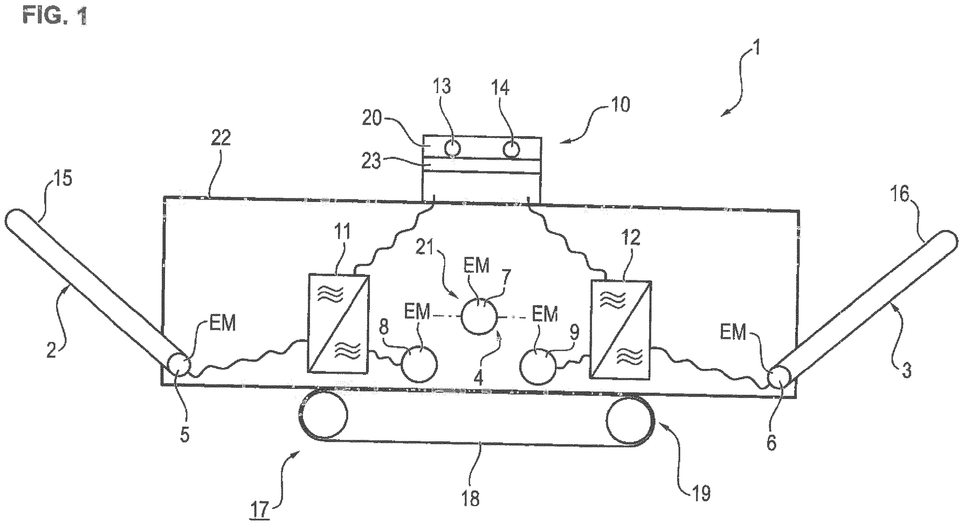

Wie Fig. 1 zeigt, kann eine Materialaufbereiter- und/oder Umschlagsanlage 1 als Brecheranlage ausgebildet sein, die zum Brechen von mineralischen Bau- bzw. Rohstoffen wie Gestein und dergleichen dienen kann. Eine solcher Brecheranlage 1 kann als Hauptarbeitsaggregat 4 ein Brecherwerk 21 beispielsweise umfassend eine Brecherwelle und/oder Hammerwerkzeuge aufweisen, wobei das genannte Brecherwerk 4 von einem Arbeitsaggregatantrieb 7 umfassend einen Elektromotor EM angetrieben werden kann.

Weitere Arbeitsaggregate 2 und 3 können beispielsweise Umlaufförderer 15 und 16 aufweisen, beispielsweise in Form von Förderbändern, über die zu bearbeitendes Material zugeführt und/oder abgeführt werden kann. Diese weiteren Arbeitsaggregate 2 und 3 können über weitere Aggregatsantriebe 5 und 6 angetrieben werden, die ebenfalls jeweils zumindest einen Elektromotor EM aufweisen können.

Die genannten Haupt- und Nebenarbeitsaggregate 5, 6 und 7 können an einem Maschinenkorpus bzw. -rahmen 22 angeordnet sein, der von einem Fahrwerk am Boden abgestützt wird, wobei das genannte Fahrwerk insbesondere als Raupenfahrwerk 17 ausgebildet sein kann, das rechte und linke Fahrwerksteile 18 und 19 aufweist.

Die genannten rechten und linken Fahrwerksteile 18 und 19 können jeweils einen eigenen Fahrantrieb 8 und 9 mit jeweils einem Elektromotor EM aufweisen, so dass die rechten und linken Fahrwerksteile mit relativ zueinander veränderbaren Fahrgeschwindigkeiten und/oder Antriebsrichtungen angetrieben werden können.

Insbesondere können die genannten Fahrwerksteile 18 und 19 jeweils eine Raupenkette umfassen, die von den genannten Fahrantrieben 8 und 9 antreibbar ist.

Zum Ansteuern der Fahr- und Aggregatsantriebe 8, 9 bzw. 5, 6 und 7 ist eine Steuervorrichtung 10 vorgesehen, die für jeden der beiden linken und rechten Fahrantriebe 8 und 9 Frequenzumrichter 11 und 12 vorsieht, um die genannten Fahrantriebe 8 und 9 unabhängig voneinander bzw. relativ zueinander variabel zu steuern. Die genannten Frequenzumrichter 11 und 12 können gleichzeitig auch zur Ansteuerung der Aggregatsantriebe 5, 6 und 7 verwendet werden und bilden Teil einer Leistungselektronik, über die die genannten Fahr- und Aggregatsantriebe 8, 9 bzw. 5, 6, 7 mit elektrischer Energie versorgt werden.

Um den gemeinsamen Frequenzumrichter 11 bzw. 12 einerseits zum Ansteuern eines Fahrantriebs 8 bzw. 9 und andererseits zum Ansteuern eines Aggregatsantriebs 5, 6, 7 verwenden zu können, kann die Parametrierung der genannten Frequenzumrichter 11 und 12 verändert werden. Hierzu kann die Steuervorrichtung 10 einen Speicherbaustein 20 umfassen, in dem verschiedene Parametersätze 13, 14 abgespeichert sein können und von der Steuervorrichtung 10 ausgelesen bzw. bereitgestellt werden, je nachdem, welcher Antrieb angesteuert werden soll.

Die Steuervorrichtung 10 kann hierzu eine Umschaltvorrichtung 23 aufweisen, die im Anlagenbetrieb ein Umschalten der Parametersätze 13 und 14 vorsehen kann, wobei die genannte Umschaltvorrichtung 23 ein manuelles Betätigungsmittel umfassen und/oder alternativ bzw. zusätzlich hierzu auch automatisch arbeitend ausgebildet sein kann. Beispielsweise kann die Umschaltung automatisch dann vorgesehen werden, wenn beispielsweise eines der Förderbänder 15 und 16 gestartet wird, wobei die Steuervorrichtung 10 hierbei zunächst prüft, ob die Fahrantriebe 8 und 9 stillgesetzt sind, um dann den Parametersatz für den jeweiligen Umlaufförderer aktiv zu schalten. Wird umgekehrt einer der Fahrantriebe 8 und 9 angefordert, indem ein Fahrwunsch eingegeben wird, prüft die Steuervorrichtung 10, ob die Arbeitsaggregate 2, 3, 4 stillgesetzt sind und schaltet dann den Parametersatz für die Ansteuerung der Fahrantriebe bereit.

## Patentansprüche

1. Selbstfahrende Materialaufbereiter- und/oder -umschlagsanlage zum Aufbereiten und/oder Umschlagen von Bau- und/oder Rohstoffen, insbesondere Brecheranlage, mit zumindest einem Arbeitsaggregat (2, 3, 4), das von einem elektrischen Aggregatsantrieb (5, 6, 7) mit einem Elektromotor (EM) antreibbar ist, sowie zumindest einem elektrischen Fahrantrieb (8, 9) mit einem Elektromotor (EM), sowie einer Steuervorrichtung (10) zum Steuern der Elektromotoren (EM) der Aggregatsund Fahrantriebe (5, 6, 7, 8, 9), **dadurch gekennzeichnet, dass** die Steuervorrichtung (10) einen gemeinsamen Frequenzumrichter (11, 12) für den Fahrantrieb (8, 9) und den Aggregatsantrieb (5, 6, 7) aufweist und verschiedene Parametersätze (13, 14) für den gemeinsamen Frequenzumrichter (11, 12) vorsieht, so dass der Fahrantrieb von dem Frequenzumrichter (11, 12) auf Basis eines ersten Parametersatzes (13) und der Aggregatsantrieb (5, 6, 7) auf Basis eines zweiten Parametersatzes (14) ansteuerbar ist.

2. Selbstfahrende Materialaufbereiter- und/oder -umschlagsanlage nach dem vorhergehenden Anspruch, wobei das zumindest eine Arbeitsaggregat (2, 3) einen Umlaufförderer, vorzugsweise in Form eines Förderbands, aufweist, dessen elektrischer Aggregatsantrieb (5, 6) von dem gemeinsamen Frequenzumrichter (11, 12) ansteuerbar ist.

3. Selbstfahrende Materialaufbereiter- und/oder -umschlagsanlage nach einem der vorhergehenden Ansprüche, wobei das zumindest eine Arbeitsaggregat (7) eine Brechereinheit oder eine Siebanlage aufweist, deren elektrischer Aggregatsantrieb (7) von dem gemeinsamen Frequenzumrichter (11, 12) ansteuerbar ist.

4. Selbstfahrende Materialaufbereiter- und/oder -umschlagsanlage nach einem der vorhergehenden Ansprüche, wobei ein Raupenfahrwerk (17) vorgesehen ist, das von dem Fahrantrieb (8, 9) antreibbar ist.

5. Selbstfahrende Materialaufbereiter- und/oder -umschlagsanlage nach dem vorhergehenden Anspruch, wobei das Raupenfahrwerk (17) rechte und linke Fahrwerksteile (18, 19) umfasst, die jeweils einen eigenen Fahrantrieb (8, 9) mit einem Elektromotor (EM) aufweisen, wobei jeder Fahrantrieb (8, 9) von einem eigenen Frequenzumrichter (11, 12) ansteuerbar ist, wobei zumindest einer der mehreren Frequenzumrichter (11, 12) der beiden Fahrwerksteile gleichzeitig zum Ansteuern zumindest eines Aggregatsantriebs (5, 6, 7) vorgesehen und mit verschiedenen Parametersätzen betreibbar ist.

6. Selbstfahrende Materialaufbereiter- und/oder -umschlagsanlage nach dem vorhergehenden Anspruch, wobei jeder der mehreren Frequenzumrichter (11, 12) einerseits einen der mehreren Fahrantriebe (8, 9) und andererseits ein weiteres Aggregatsantrieb (5, 6, 7) ansteuert.

7. Selbstfahrende Materialaufbereiter- und/oder -umschlagsanlage nach einem der vorhergehenden Ansprüche, wobei die verschiedenen Parametersätze (13, 14) in einem Speicherbaustein (20) abgelegt und von der Steuervorrichtung (10) wahlweise aufrufbar sind, je nachdem, ob der zumindest eine Fahrantrieb (8, 9) oder der zumindest eine Aggregatsantrieb (5, 6, 7) anzusteuern ist.

8. Selbstfahrende Materialaufbereiter- und/oder -umschlagsanlage nach einem der vorhergehenden Ansprüche, wobei die Steuervorrichtung (10) eine Bestimmungseinrichtung zum Bestimmen von Betriebscharakteristika der anzusteuernden Fahr- und Aggregatsantriebe sowie einen Anpassungsbaustein zum Anpassen der Parametrierung des gemeinsamen Frequenzumrichters (11, 12) in Abhängigkeit der bestimmten Betriebscharakteristika aufweist.

9. Selbstfahrende Materialaufbereiter- und/oder -umschlagsanlage nach einem der vorhergehenden Ansprüche, wobei die Steuervorrichtung (10) eine Umschaltvorrichtung (23) zum Umschalten zwischen den mehreren Parametersätzen (13 und 14) für den gemeinsamen Frequenzumrichter (11, 12) aufweist.

10. Selbstfahrende Materialaufbereiter- und/oder -umschlagsanlage nach dem vorhergehenden Anspruch, wobei die Umschaltvorrichtung (23) in Abhängigkeit der Eingabe eines Fahrantriebs-Betriebswunsches oder eines Arbeitsaggregats-Betriebswunsches automatisch umschaltend ausgebildet ist, wobei vorzugsweise die genannte Umschaltvorrichtung (23) dazu ausgebildet ist, eine Umschaltung des Parametersatzes für den neu anzusteuernden Antrieb erst nach Stillsetzen des bislang anzusteuernden Antriebs vorzunehmen.

## Claims

1. Self-propelled material processing and/or handling system for processing and/or handling construction and/or raw materials, in particular a crushing system, with at least one working unit (2, 3, 4) which is drivable by an electric unit drive (5, 6, 7) with an electric motor (EM), as well as at least one electric travel drive (8, 9) with an electric motor (EM), as well as a control device (10) for controlling the electric motors (EM) of the unit and travel drives (5, 6, 7, 8, 9), **characterized in that** the control device (10) comprises a common frequency converter (11, 12) for the travel drive (8, 9) and the unit drive (5, 6, 7) and provides various parameter sets (13, 14) for the common frequency converter (11, 12), so that the travel drive is actuatable by the frequency converter (11, 12) on the basis of a first parameter set (13) and the unit drive (5, 6, 7) is actuatable on the basis of a second parameter set (14).

2. Self-propelled material processing and/or handling system according to the preceding claim, wherein the at least one working unit (2, 3) comprises a circulating conveyor, preferably in the form of a conveyor belt, the electric unit drive (5, 6) of which is actuatable by the common frequency converter (11, 12).

3. Self-propelled material processing and/or handling system according to one of the preceding claims, wherein the at least one working unit (7) comprises a crushing device or a sieve system, the electric unit drive (7) of which is actuatable by the common frequency converter (11, 12).

4. Self-propelled material processing and/or handling system according to one of the preceding claims, wherein a crawler chassis (17) is provided, which is drivable by the travel drive (8, 9).

5. Self-propelled material processing and/or handling system according to the preceding claim, wherein the crawler chassis (17) includes right and left chassis parts (18, 19), which respectively comprise a distinct travel drive (8, 9) with an electric motor (EM), wherein each travel drive (8, 9) is actuatable by a distinct frequency converter (11, 12), wherein at least one of the multiple frequency converters (11, 12) of the two chassis parts is simultaneously provided to actuate at least one unit drive (5, 6, 7) and can be operated with various parameter sets.

6. Self-propelled material processing and/or handling system according to the preceding claim, wherein each of the multiple frequency converters (11, 12) actuates one of the multiple travel drives (8, 9) on the one hand, and actuates a further unit drive (5, 6, 7) on the other hand.

7. Self-propelled material processing and/or handling system according to one of the preceding claims, wherein the various parameter sets (13, 14) are stored in a memory module (20) and are selectively accessible by the control device (10), depending on whether the at least one travel drive (8, 9) or the at least one unit drive (5, 6, 7) is to be actuated.

8. Self-propelled material processing and/or handling system according to one of the preceding claims, wherein the control device (10) comprises a determining device for determining operating characteristics of the travel and unit drives to be actuated, as well as an adaptor module for adapting the parameterization of the common frequency converter (11, 12) depending on the determined operating characteristics.

9. Self-propelled material processing and/or handling system according to one of the preceding claims, wherein the control device (10) comprises a switching device (23) for switching between the multiple parameter sets (13 and 14) for the common frequency converter (11, 12).

10. Self-propelled material processing and/or handling system according to the preceding claim, wherein the switching device (23) is configured to be automatically switching depending on the input of a travel drive operating wish or a working unit operating wish, wherein preferably, the mentioned switching device (23) is configured to undertake a switching of the parameter set for the drive to be newly actuated only after a stopping of the drive hitherto to be actuated.

## Revendications

1. Installation automotrice de traitement et/ou de transbordement de matériaux pour traiter et/ou transporter des matériaux bruts et/ou de construction, en particulier installation de concassage, comprenant au moins un organe de travail (2, 3, 4), qui peut être entraîné par un entraînement électrique d'organe (5, 6, 7) doté d'un moteur électrique (EM), ainsi qu'au moins un entraînement de translation (8, 9) doté d'un moteur électrique (EM), ainsi qu'un dispositif de commande (10) pour commander les moteurs électriques (EM) des entraînements d'organe et de translation (5, 6, 7, 8, 9), **caractérisée en ce que** le dispositif de commande (10) comporte un convertisseur de fréquence (11, 12) commun pour l'entraînement de translation (8, 9) et l'entraînement d'organe (5, 6, 7) et prévoit différents jeux de paramètres (13, 14) pour le convertisseur de fréquence (11, 12) commun, de telle sorte que l'entraînement de translation peut être commandé par le convertisseur de fréquence (11, 12) sur la base d'un premier jeu de paramètres (13) et l'entraînement d'organe (5, 6, 7) sur la base d'un second jeu de paramètres (14).

2. Installation automotrice de traitement et/ou de transbordement de matériaux selon la revendication précédente, dans laquelle l'au moins un organe de travail (2, 3) comporte un transporteur continu, de préférence sous la forme d'une bande transporteuse, dont l'entraînement électrique d'organe (5, 6) peut être commandé par le convertisseur de fréquence (11, 12) commun.

3. Installation automotrice de traitement et/ou de transbordement de matériaux selon l'une des revendications précédentes, dans laquelle l'au moins un organe de travail (7) comporte une unité de concassage ou une installation de criblage, dont l'entraînement électrique d'organe (7) peut être commandé par le convertisseur de fréquence (11, 12) commun.

4. Installation automotrice de traitement et/ou de transbordement de matériaux selon l'une des revendications précédentes, dans laquelle un train de roulement à chenilles (17) est prévu, qui peut être entraîné par l'entraînement de translation (8, 9).

5. Installation automotrice de traitement et/ou de transbordement de matériaux selon la revendication précédente, dans laquelle le train de roulement à chenilles (17) comprend des parties droite et gauche de train de roulement (18, 19), qui comportent respectivement un entraînement de translation (8, 9) propre doté d'un moteur électrique (EM), chaque entraînement de translation (8, 9) pouvant être commandé par un convertisseur de fréquence (11, 12) propre, au moins un des plusieurs convertisseurs de fréquence (11, 12) des deux parties de train de roulement étant à la fois prévu pour la commande d'au moins un entraînement d'organe (5, 6, 7) et pouvant être utilisé avec différents jeux de paramètres.

6. Installation automotrice de traitement et/ou de transbordement de matériaux selon la revendication précédente, dans laquelle chacun des plusieurs convertisseurs de fréquence (11, 12) commande d'une part un des plusieurs entraînements de translation (8, 9) et d'autre part un autre entraînement d'organe (5, 6, 7).

7. Installation automotrice de traitement et/ou de transbordement de matériaux selon l'une des revendications précédentes, dans laquelle les différents jeux de paramètres (13, 14) sont stockés dans un composant de stockage (20) et peuvent être appelés sélectivement par le dispositif de commande (10), selon que l'au moins un entraînement de translation (8, 9) ou l'au moins un entraînement d'organe (5, 6, 7) est à commander.

8. Installation automotrice de traitement et/ou de transbordement de matériaux selon l'une des revendications précédentes, dans laquelle le dispositif de commande (10) comporte un moyen de détermination pour déterminer des caractéristiques de fonctionnement des entraînements de translation et d'organe à commander ainsi qu'un composant d'adaptation pour adapter le paramétrage du convertisseur de fréquence (11, 12) commun en fonction des caractéristiques de fonctionnement déterminées.

9. Installation automotrice de traitement et/ou de transbordement de matériaux selon l'une des revendications précédentes, dans laquelle le dispositif de commande (10) comporte un dispositif de commutation (23) pour commuter entre les plusieurs jeux de paramètres (13 et 14) pour le convertisseur de fréquence (11, 12) commun.

10. Installation automotrice de traitement et/ou de transbordement de matériaux selon la revendication précédente, dans laquelle le dispositif de commutation (23) est conçu de façon à commuter automatiquement en fonction de la saisie d'un souhait de fonctionnement de l'entraînement de translation ou d'un souhait de fonctionnement de l'entraînement d'organe, ledit dispositif de commutation (23) étant de préférence conçu pour effectuer une commutation du jeu de paramètres pour le nouvel entraînement à commander uniquement après la mise à l'arrêt de l'entraînement à entraîner jusqu'ici.
